# EUROPÄISCHE PATENTSCHRIFT

(11) **EP 1 087 720 B1**
(45) Veröffentlichungstag und Bekanntmachung des Hinweises auf die Patenterteilung: **07.04.2004**
(21) Anmeldenummer: 00912433.0
(22) Anmeldetag: 19.01.2000
(51) Int. Cl.: A61C 13/00, A61C 13/083

(54) **VERFAHREN ZUR HERSTELLUNG MEDIZINISCHER, ZAHNMEDIZINISCHER, ZAHNTECHNISCHER UND TECHNISCHER TEILE AUS KERAMIK**
METHOD FOR PRODUCING CERAMIC MEDICAL, DENTAL MEDICAL, TECHNICAL DENTAL AND TECHNICAL PARTS
PROCEDE DE PRODUCTION D'ELEMENTS CERAMIQUE MEDICAUX, MEDICO-DENTAIRES, PROTHETIQUES DENTAIRES ET TECHNIQUES

(30) Priorität: 16.04.1999 DE 19917324; 02.07.1999 DE 19930564
(43) Veröffentlichungstag der Anmeldung: 04.04.2001
(73) Patentinhaber: Kaltenbach & Voigt GmbH & Co. KG, 88400 Biberach/Riss (DE)
(72) Erfinder: BODENMILLER, Anton, D-88299 Leutkirch (DE); STEINHAUSER, Pius, D-88299 Leutkirch (DE)
(74) Vertreter: Schmidt-Evers, Jürgen, Dipl.-Ing.
(86) Internationale Anmeldenummer: PCT/EP2000/000404
(87) Internationale Veröffentlichungsnummer: WO 2000/062705

(56) Entgegenhaltungen:
- EP-A- 0 030 850
- EP-A- 0 580 565

## Beschreibung

Die Erfindung betrifft ein Verfahren zur Herstellung von Formteilen aus Keramik, insbesondere für medizinische oder zahnmedizinische Zwecke.

In der Medizintechnik, Zahnmedizin oder Zahntechnik werden prothetische Teile bisher überwiegend aus hochwertigen Edelmetall-Legierungen, Kobalt-Chromlegierungen und teilweise auch aus Titan hergestellt. Wegen der erforderlichen Biokompatibilität von derartigen Medizinprodukten werden die Metalloberflächen dieser prothetischen Teile in der Regel mit keramischen Substraten beschichtet. In der Zahnmedizin bzw. Zahntechnik erfolgt aus überwiegend ästhetischen Gründen oftmals eine Verblendung mit dentalen Porzellanen, insbesondere im Frontzahnbereich.

Seit längerer Zeit werden Anstrengungen unternommen, diese Metall-Legierungen durch vollkeramische Systeme zu substituieren. Dies setzt jedoch den Einsatz von Hochleistungskeramiken voraus, wie sie in der technischen Keramik teilweise bei industriell gefertigten Serienteilen eingesetzt werden. Im Gegensatz zu den industriell gefertigten Keramikteilen handelt es sich allerdings bei den in der Medizintechnik oder Zahntechnik hergestellten prothetischen Werkstücken jeweils um Unikate, weshalb aus wirtschaftlichen, werkstofftechnischen und verfahrenstechnischen Gründen die bekannten industriellen Produktionsmethoden nicht angewandt werden können. Ein weiteres bekanntes Problem solcher Hochleistungskeramiken ist der teilweise starke Schwund der Keramikmassen beim Sintern, der bis zu 20% betragen kann. Derartige Maßveränderungen sind allerdings bei zahntechnischen Formteilen nicht tolerierbar, da beispielsweise bei Brückenarbeiten die Abstände zwischen den Pfeilern (Stümpfen) bzw. die Höhenlage der Kontaktpunkte zum Antagonisten im Mikrometerbereich eingehalten werden müssen.

Aus diesem Grund wurden mehrere Versuche unternommen, aus massiven, fertiggesinterten Keramikblöcken (Halbzeug) die prothetische Teile direkt durch Spanen mit geometrisch bestimmten Schneiden, Spanen mit geometrisch unbestimmten Schneiden oder durch das Abtragen mittels Ultraschallerosion oder Laser, herauszuarbeiten.

In der Praxis durchgesetzt hat sich - allerdings nur in beschränktem Ausmaß - das Herausschleifen bzw. Fräsen von Keramikteilen mit Hilfe von Diamantwerkzeugen, beispielsweise beim sogenannten CAD-CAM-Verfahren. Bei diesem Verfahren wird zunächst eine Vermessung des Zahnstumpfes und anschließend der darauf vorgesehenen Krone, die beispielsweise als Wachsmodell zur Verfügung steht, vorgenommen. Die Daten werden dann in ein CAD-Programm eingegeben, das eine Fräsmaschine steuert. Diese Fräsmaschine bearbeitet dann automatisch den gesinterten und hochfesten Keramikblock. Der Aufwand hierfür ist allerdings außerordentlich hoch, da der bereits gesinterte Keramikblock extrem hart ist. Werden beispielsweise Hochleistungskeramiken wie Aluminiumoxid (Al₂O₃) oder Zirconoxid (ZrO₂) beschliffen, verschleißen die Diamantwerkzeuge sehr schnell mit der Folge von Geometrietoleranzen am Werkstück, da sich die Geometrie und der Durchmesser der Werkzeuge während der Bearbeitung ändern. Ferner können an kritischen Stellen der Prothesenteile, wie z.B. an Kronenrändern, Materialausbrüche oder Mikrorisse entstehen. Ein weiteres Problem stellt die lange Schleifzeit dar, da nur mit geringen Abtragraten und reduzierter Vorschubgeschwindigkeit gearbeitet werden kann, da andernfalls große Spannungen in dem Material entstehen können, die wiederum zu Haarrissen und dgl. führen können. Es ist ferner ein Trennschritt notwendig, bei dem am Ende der Bearbeitung die ausgefräste Krone von dem Rest des Keramikblocks getrennt wird. Bei diesem manuellen Trenn- und Schleifvorgang können sowohl Geometriefehler als auch Materialausbrüche entstehen, so daß das teuer gefertigte Teil evtl. nicht mehr zu gebrauchen ist. Schließlich erfordert die Bearbeitung von Hochleistungskeramiken teure und automatisch arbeitende Schleif- oder Fräsmaschinen, da der Zahntechniker oder Maschinenbediener die Bearbeitungsparameter (Vorschub, Zustellung) gar nicht mehr manuell beherrschen kann. Alternativ zu den Hochleistungskeramiken können zwar auch modifizierte Dentalkeramiken eingesetzt werden, die eine noch wirtschaftliche Schleifbearbeitung zulassen, wobei diese modifizierten Keramiken allerdings dann auch nur reduzierte Festigkeitswerte aufweisen.

Alternativ zur Bearbeitung von bereits gesinterten und hochfesten Keramikblöcken wurden daher Verfahren entwickelt, bei denen die Keramikformteile aus einem noch nicht gesinterten Keramik-Rohmaterial oder aus vorgesintertem Material hergestellt werden. Bei zwei bekannten Verfahren wird von dem bearbeiteten Zahnstumpf zunächst ein Abdruck genommen und anschließend ein Positiv geformt, das seinerseits aus feuerfestem Material, insbesondere Keramik, besteht. Auf diesen Positivstumpf wird eine Zahnkrone aus Wachs aufgeformt, welche die Endform der Krone simuliert. Anschließend wird der Positivstumpf mit der darauf befindlichen Wachskrone auf einen Gummisockel aufgesetzt, der den Boden zu einem Gummiring bildet, wobei dieser Gummiring den Positivstumpf mit der Wachskrone mit Abstand umgibt. In die auf diese Weise gebildete Muffelform wird dann eine flüssige oder plastische Einbettmasse eingeleitet, die den Positivstumpf mit der Wachskrone bis auf einen Eingußkanal umgibt. Dieser Eingußkanal wird z.B. durch einen Wachskegel gebildet. der mit der Wachskrone in Verbindung steht.

Nach dem Aushärten der Einbettmasse werden die Gummiunterlage und der Gummiring entfernt, so daß die ausgehärtete Einbettmasse mit dem Einfüllwachskegel frei zur Verfügung steht. Diese Einheit kommt danach in einen Auswachs- und Vorwärmofen, so daß das Wachs der Wachskrone über den Einfüllstutzen ausgetrieben wird. Auf diese Weise wird in der Einbettmasse ein der Wachskrone entsprechender Hohlraum gebildet.

Die Einbettmasse mit dem darin befindlichen Hohlraum sowie ein gesinterter Porzellanrohling werden dann gemeinsam in einen Vorwärmofen eingebracht und auf ca. 800°C erhitzt. Bei dieser Temperatur wird der gesinterte Porzellanrohling plastisch, während die Einbettmasse selbst aushärtet. Nach dem Herausnehmen der Einbettmasse und des plastischen Porzellanrohlings aus dem Ofen wird das nun plastische Porzellan über die Einfüllöffnung in den Hohlraum mittels einer Pressvorrichtung eingebracht. Dieses Einpressen selbst erfolgt in einem speziellen Einpressofen. Nach dem Abkühlen der Porzellanmasse wird dann die Einbettmasse zerstört, so daß die Krone mit dem darin befindlichen Einfüllstutzen frei wird. Als abschließender Schritt erfolgt schließlich das Trennen der Krone von dem im Eingußkanal entstandenen Anfüllstutzen sowie eine abschließende Außenbearbeitung.

Auch bei diesem Verfahren besteht die Gefahr, daß beim Trennen der Porzellankrone von dem Anfüllstutzen Risse in der Krone entstehen können. Die Verwendung eines bereits gesinterten Porzellan-Rohlings gewährleistet, daß bei der Krone keine Schrumpfung mehr auftritt, wenn diese nachfolgend in dem Brennofen nochmals gebrannt wird. Im Gegensatz zu Keramik kann bereits gesintertes Porzellan bei Erhitzen auf ca. 800 °C nochmals plastifiziert werden, was bei Keramiken selbst bei extrem hohen Temperaturen nicht mehr möglich ist. Allerdings weist Keramik gegenüber Porzellan eine erheblich höhere Biegefestigkeit auf. Die Herstellung von zwei oder mehreren Kronen, die über einen Verbindungssteg miteinander verbunden sind, ist mit Porzellan beispielsweise nicht möglich, da dieser Verbindungssteg brechen würde. Derartige komplizierte zahntechnische Formteile können daher nur mit Keramikmaterial hergestellt werden. Dies ist der Grund, weswegen Porzellan in der Regel nur für Inlays, Onlays oder Einzelkronen verwendet wird.

Das zur Zeit am weitesten verbreitete Verfahren in der Dentaltechnik zur Herstellung von Keramikkronen ist das sogenannte Schlicker-Verfahren. Von dem bearbeiteten Zahnstumpf wird dabei zunächst ein Abdruck gemacht und dann ein Metallgerüst, insbesondere aus Gold. Titan oder dal. angefertigt. Dieses Metallgerüst besteht aus einer sich an den Zahnstumpf anpassenden dünnen Schicht und ergibt letztendlich ein becherförmiges Teil. Auf dieses Gerüst wird dann Keramikmaterial in plastischer Form (Schlicker) in mehreren Schichten aufgetragen, wobei jeweils nach dem Auftragen einer Schicht ein Brennen des Metallgerüstes mit dem aufgetragenen Keramikschlicker erfolgt. Auf diese Weise wird die Krone an der Außenseite ungleichmäßig beschichtet und an das Gebiß angepaßt. Der Keramikschlicker wird dabei mit einem Pinsel auf das Metallgerüst aufgetragen, hat allerdings den Nachteil, daß er einen hohen Anteil an Flüssigkeit, insbesondere Wasser enthält, die beim Brennen zu einer Schrumpfung des Materials führt. Diese Schrumpfung ist nur schwer kalkulierbar, weswegen die Keramikmasse auch in mehreren Schichten aufgetragen werden muß.

Ein weiteres Verfahren zur Herstellung von dentalen Keramikteilen, bei dem die Schrumpfung des Keramikmaterials berücksichtigt wird, ist in der EP 0 389 461 B1 beschrieben. Hier wird vorgeschlagen, zunächst durch einen Abdruck eine Negativkopie der Oberfläche des bearbeiteten Zahnstumpfes zu erstellen und anschließend einen isostatisch verdichteten Keramikgrünling mittels Kopierfräsen zu bearbeiten. Während des Kopierfräsens wird die Sinterschrumpfung berücksichtigt, indem die Oberfläche des bearbeiteten Grünlings etwas vergrößert wird, um die anschließende Schrumpfung wieder aufzufangen. Dabei wird durch das Kopierfräsen allerdings nur die Unterseite des Keramikgrünlings bearbeitet, die Oberseite des Formteiles wird nach dem Sintern noch mit einer Porzellanschicht verkleidet und in die endgültige Form gebracht. In ähnlicher Weise wird auch in der EP 0 375 647 B1 vorgeschlagen einen Keramikgrünling vor dem Sintern durch Fräsen zu bearbeiten.

Die Bearbeitung eines solchen Grünlings gestaltet sich allerdings ziemlich schwierig, daß das verdichtete Material sehr brüchig ist. Die beiden zuvor genannten Druckschriften geben keine Auskunft darüber, wie diese Schwierigkeiten bewältigt werden können. In einer Weiterentwicklung wird daher in der EP 0 580 565 A2 vorgeschlagen, das pulverförmige Keramik-Rohmaterial gegen die Oberfläche einer Positivkopie des bearbeiteten Zahnstumpfes zu verdichten. Wiederum wird dabei die Positivkopie gegenüber dem Zahnstumpf vergrößert um die Schrumpfung auszugleichen. Auch hier wird die Oberfläche des Keramikformteiles mit einer Porzellanschicht verkleidet.

Um diese schwer kalkulierbare Schrumpfung der Keramik beim Sintern zu vermeiden, wird in der EP 0 030 850 die Verwendung eines schrumpffreien Keramikmaterials vorgeschlagen. Dabei wird das Rohmaterial in pulverförmiger oder in flüssiger Form in eine vorgefertigte Gußform, deren Struktur im wesentlichen der Form des herzustellenden Keramikteils entspricht, gepreßt oder gegossen oder wiederum gegen einen Stempel gepreßt, der eine exakte Kopie des Zahnstumpfes ist. Wie bei den anderen Verfahren ist also auch hier zunächst eine recht aufwendige Herstellung einer entsprechenden Gußform notwendig.

Es ist daher Aufgabe der vorliegenden Erfindung, ein einfaches und wirtschaftliches Verfahren zur Herstellung von Formteilen aus Keramik anzugeben, das beispielsweise von einem Zahnarzt oder Zahntechniker direkt in einem medizinischen Labor, Praxislabor oder gewerblichen Labor durchführbar ist.

Die Aufgabe wird durch ein Verfahren, welches die Merkmale des Anspruches 1 aufweist, gelöst. Bei dem erfindungsgemäßen Verfahren wird zunächst das pulverförmige Keramik-Rohmaterial zu einem Keramikgrünling gepreßt, dieser Keramikgrünling dann mittels abtragender Verfahren bearbeitet und anschließend zu einem hochfesten Keramikformteil gesintert, wobei der Grünling vor der Bearbeitung mittels einer Einbettmasse, die den Grünling weder beschädigt noch mit ihm chemisch reagiert, in eine Werkstückaufnahme eingebettet wird. Dabei wird das zunächst pulverförmige Keramik-Rohmaterial erst durch das Pressen in einen Zustand versetzt, in dem es überhaupt bearbeitet werden kann. Der Zustand des Keramikgrünlings ähnelt dann dem von Kreide, d.h. er läßt sich im Vergleich zu bereits gesinterten Keramikblöcken wesentlich leichter, schneller und mit weniger Abrieb an den Werkzeugen und dementsprechend sehr viel genauer bearbeiten. Durch das erfindungsgemäße Einbetten wird der Keramikgrünling während der Bearbeitung sowohl fixiert als auch gestützt, so daß kein Ausbrechen von dünnen Wänden oder andere Beschädigungen zu befürchten sind und er somit effektiv und genau bearbeitet werden kann. Ein weiterer Vorteil dieses Verfahrens besteht darin, daß überschüssiges Rohmaterial, welches beim Bearbeiten des Keramikgrünlings abgefräst wird, wieder zurückgewonnen und wiederverwendet werden kann, wodurch der Materialaufwand deutlich reduziert wird. Da auch die Bearbeitungswerkzeuge weniger beansprucht werden und somit eine längere Lebensdauer erreichen, ist das erfindungsgemäße Verfahren als wesentlich wirtschaftlicher gegenüber den bekannten Verfahren, bei denen bereits gesinterte Keramikblöcke bearbeitet werden, anzusehen. Nach dem erfindungsgemäßen Verfahren können in der Medizin, Zahnmedizin und Zahntechnik biokompatible Implantatteile, Inlays, Teilkronen, Kronen, Brücken, Prothesenbasen oder Hilfsteile genau und mit hoher, dem Einsatzzweck angepaßter mechanischer Festigkeit wirtschaftlich hergestellt werden. Insbesondere ist bei diesem Verfahren die Möglichkeit gegeben, einen Keramikgrünling, dessen ursprüngliche Form mit der endgültigen Struktur des herzustellenden Keramik-Formteils nichts gemeinsam hat, ausschließlich durch Bearbeiten mittels abtragender Verfahren in die gewünschte endgültige Form zu bringen, ohne das Material - wie in den bekannten Verfahren - in eine Gußform oder gegen einen Stempel zu pressen.

Weiterbildungen der Erfindung sind Gegenstand der abhängigen Ansprüche. Ein wesentlicher Aspekt des Verfahrens liegt in der Auswahl des Keramik-Rohmaterials. Dieses soll während des Sinterns möglichst wenig schrumpfen, im Idealfall nahezu schrumpffrei sein. Ein Keramikmaterial, das diese Voraussetzungen erfüllt, ist beispielsweise Zircon (ZrSiO₄), dessen Eigenschaften noch ausführlicher beschrieben werden. Allerdings wäre es auch denkbar, die bereits bekannten und vielfach verwendeten Keramiken Zirconoxid (ZrO₂) oder Aluminiumoxid (Al₂O₃) zu verwenden. Diese schrumpfen während des Sinterns zu einem gewissen Grad. Der in der Regel zu einem Würfel oder kastenförmig gepreßte Keramikgrünling weist allerdings eine äußerst gleichmäßige Materialdichte auf, so daß zu erwarten ist, daß das Material während des Sinterns gleichmäßig und damit vorhersehbar schrumpft. Im Gegensatz zu den bekannten Verfahren, bei denen beispielsweise das Pulver in eine Gießform eingepreßt oder unter Druck eingegossen wird, und bei denen daher eine ungleichmäßige Dichteverteilung des Rohmaterials oftmals nicht zu vermeiden ist, kann bei dem erfindungsgemäßen Verfahren der Schrumpfungsprozeß sehr einfach berücksichtigt und durch Herstellen größerer Formteile vor dem Sintern ausgeglichen werden.

Die Merkmale weiterer Unteransprüche befassen sich mit vorteilhaften Ausführungsformen des Bearbeitungsprozesses des Keramikgrünlings. Vorzugsweise wird der Keramikgrünling mit Hilfe einer abtragenden Maschine - wie z.B. einer Fräs,-Dreh-, Bohr- oder Schleifmaschine -bearbeitet, wobei das Bearbeiten automatisch erfolgen kann. Die entsprechenden Steuerbefehle für die abtragende Maschine können dann in einem speziellen Abtragungsprogramm enthalten sein, das z.B. auf der Basis eines dreidimensional vermessenen Positivmodells des Zahnstumpfes und der Zahnkrone erstellt wird. Dabei können beim Erstellen des Abtragungsprogramms Parameter, wie z.B. eine gewünschte Zementspaltbreite oder ein eventueller Schrumpfungsfaktor des Rohkeramik-Materials berücksichtigt werden. Als Einbettmasse kann beispielsweise ein geeignetes Fräswachs verwendet werden. Die Bearbeitung des Grünlings kann in mehreren Schritten erfolgen, in denen jeweils bestimmte Bereiche des Grünlings bearbeitet werden, wobei die bereits zuvor bearbeiteten Bereiche des Grünlings wieder mit der Einbettmasse umgeben und damit stabilisiert werden. Auf diese Weise können somit die sehr dünnen Seitenwände von Keramikkronen während der Bearbeitung geschützt werden. Durch Schmelzen des Fräswachses kann dann nach der Bearbeitung der Keramikgrünling wieder schonend ausgebettet werden. Auch dieses Fräswachs bzw. die Einbettmasse kann während der Bearbeitung des Grünlings aufgefangen und wiederverwendet werden.

Es sollen nun die Eigenschaften von drei bevorzugt verwendeten Keramikmaterialien besprochen werden.

Das sehr häufig verwendete Aluminiumoxid (Al₂O₃) ist auch unter dem Namen Korund bekannt. Neben vielfältigen Anwendungsmöglichkeiten dieses Materials in der Industrie (z.B. als Strahlmittel, Schleifmittel, Feuerfestmaterialien) ist Aluminiumoxid ein sehr häufig verwendetes Oxid in verschiedensten Tonmineralien und Keramiken, welche beim keramischer Zahnersatz aber auch bei Blumenvasen oder Kaffeetassen Verwendung finden. Aluminiumoxid ist insbesondere ein für den Zahnersatz geeignetes Material, da es eine zahnfarbene Erscheinung, hohe Abrasionsfestigkeit, chemische Resistenz, biologische Verträglichkeit und ein angenehmes Kontaktgefühl bei glanzgebrannten oder polierten Keramikoberflächen aufweist. Ein weiterer Vorteil ist auch darin zu sehen, daß Aluminiumoxid röntgentransluzent ist und daraus bestehende Zahnkronen bei Röntgenuntersuchungen keine Artefakte verursachen, die zu Fehlinterpretationen des Röntgenbildes führen könnten.

Zirconoxid (ZrO₂) kann in mehreren unterschiedlichen Kristallmodifikationen auftreten. Da Zirconoxide unter den bekannten Keramikmaterialien die höchsten Biegebruch- und Zugfestigkeitswerte, eine hohe Verschleißfestigkeit und Korrosionsbeständigkeit sowie eine niedrige Wärmeleitfähigkeit aufweisen, haben diese in den letzten Jahren im technischen und medizinischen Bereich zunehmende Bedeutung erlangt. Aufgrund ihrer hervorragenden Eigenschaften werden Zirconoxid-Keramiken bevorzugt für mechanisch hoch belastbare Komponenten eingesetzt. Ferner zeigt Zirconoxid während des Sinterns nur einen relativ geringen Schwund.

Ausgehend von Zirconoxid (ZrO₂) können mit Hilfe eines Reaktionssinterverfahrens ZrSiO₄-Keramiken, die nahezu schrumpffrei sind, hergestellt werden. Dies wird dadurch erreicht, daß eine in dem Rohkeramik-Grünling enthaltene reaktive Komponente während des Sintems ihr Volumen vergrößert und somit das Schrumpfen der übrigen Komponenten kompensiert. Ein derartiges für Zirconoxide geeignetes Verfahren wird beispielsweise in dem Artikel "Verfahren zur Herstellung schrumpffreier ZrSiO₄-Keramiken" der Keramischen Zeitschrift 50(4) 1998 beschrieben. Als reaktive Komponente wird in diesem Fall eine intermetallische Verbindung (Zirconiumdisilicid, ZrSi₂) eingesetzt. Zusätzlich wird Polysiloxan, ein sogenannter low-loss-binder, als Preßhilfsmittel verwendet, welches während des Sinterns mit dem Zirconiumdisilicid und dem Zirconoxid zur gewünschten Keramik (ZrSiO₄) reagiert. Der wesentliche Vorteil dieses Reaktionssinterverfahrens besteht darin, daß der zu erwartende Sinterschrumpf, der eine Funktion des Anteils der verschiedenen Reaktionskomponenten ist, mit Hilfe einer einfachen Berechnung abgeschätzt werden kann. Es kann dann der benötigte Anteil der reaktiven Komponente, also des Zirconiumdisilicids (ZrSi₂), berechnet werden, bei dem eine Schrumpfung von nahezu 0% auftritt.

Aufgrund der eben beschriebenen Eigenschaften lassen sich mit dieser ZrSiO₄-Keramik mikrostrukturierte Bauteile herstellen, deren Ausmaße vor und nach dem Sintern identisch sind. Eine mechanische Nachbearbeitung, die bei sehr kleinen Detailstrukturen oftmals gar nicht möglich ist ohne das Werkstück zu beschädigen, ist dann nicht mehr nötig. Aus den gleichen Gründen ist diese Keramik daher auch hervorragend für die Herstellung zahnmedizinischer oder zahntechnischer Teile, insbesondere von Zahnkronen mit dünnen Wänden, geeignet.

Die drei eben genannten Keramikmaterialien sind aufgrund ihrer Eigenschaften für die Anwendung im zahnmedizinischen Bereich besonders gut geeignet. Dennoch ist das erfindungsgemäße Verfahren nicht auf diese Werkstoffe beschränkt, sondern kann auch bei anderen Keramikmaterialien, beispielsweise bei Magnesiumoxid (MgO), Aluminiumtitanat (AlTi) oder Piezokeramiken (PZT), nicht nur in medizinischen, sondern auch in technischen Bereichen zur Anwendung kommen. Die Verwendung eines schrumpffreien Keramikmaterials ist dabei zwar besonders vorteilhaft, allerdings keineswegs unumgänglich, da - wie bereits angemerkt - durch das gleichmäßige Zusammenpressen des Materials zu einem Grünling eine homogene Dichteverteilung und dementsprechend ein gleichmäßiges und somit steuerbares Schrumpfen des Formteiles während dem Sintern erreicht wird.

Im folgenden soll die Erfindung anhand der beiliegenden Zeichnung, welche die einzelnen Schritte eines erfindungsgemäßen Verfahrens zur Herstellung einer Zahnkrone darstellt, näher erläutert werden. Es zeigen:
- Fig. 1: einen in eine Werkstückaufnahme eingesetzten Grünling;
- Fig. 2: die Fertigung der Kroneninnenseite;
- Fig. 3: die Fertigung des ersten Bereiches der Kronenaußenseite;
- Fig. 4: das Wiedereinbetten der bereits bearbeiteten Seite;
- Fig. 5: die um 180° gedrehte Werkstückaufnahme;
- Fig. 6: die Fertigung des zweiten Bereichs der Kronenaußenseite; und
- Fig. 7: das Ausbetten des Grünlings.

Ein Vorteil des im folgenden beschriebenen Verfahrens besteht darin, daß es im Prinzip den bisher bekannten Verfahren zur Herstellung von Zahnkronen sehr ähnlich ist und daher von einem Zahntechniker sehr einfach durchzuführen ist.

Zunächst fertigt dabei der Zahntechniker, beispielsweise auf der Basis eines Abdruckes, als Grundlage seiner prothetischen Arbeit ein Positivmodell des bearbeiteten Zahnstumpfes aus Gips oder einem anderen geeigneten Modellwerkstoff an. Dieses Positivmodell wird anschließend in einer Meßvorrichtung mechanisch, optisch oder nach einem anderen Verfahren dreidimensional vermessen. Über eine spezielle Software wird dann ein Fräs- oder Abtragungsprogramm zum Herausarbeiten der Kroneninnenseite, deren Struktur der Form des Zahnstumpfes entspricht, generiert und in die Steuerung einer automatischen Fräsmaschine geladen. Dabei können von dem Zahntechniker zusätzliche Parameter, beispielsweise eine erforderliche Zementspaltbreite, eingegeben werden, die bei der Erstellung des Fräsprogramms von der Software berücksichtigt werden. Ferner können für Keramiken, die beim Sintern schwinden, entsprechende Korrekturfaktoren berücksichtigt werden, um den Schwund durch Erstellen von leicht vergrößerten Formteilen zu kompensieren.

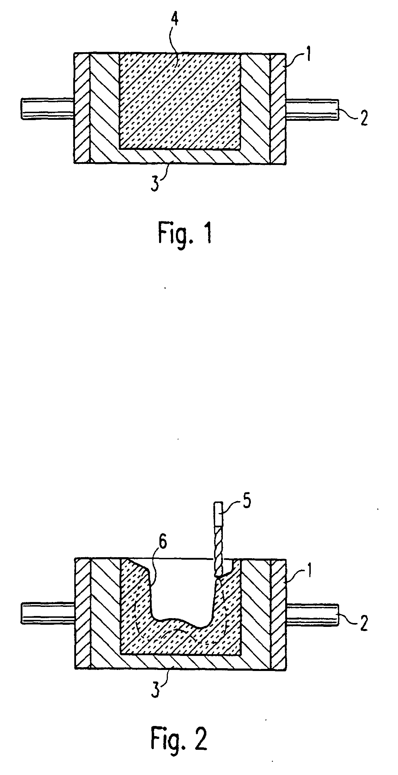

Wie in Figur 1 gezeigt, setzt dann der Zahntechniker in eine mit einer Drehachse 2 versehene Werkstückaufnahme 1 einen isostatisch gepreßten Keramikgrünling 4, beispielsweise aus einem schrumpfungsfreien Keramikmaterial, aus Aluminiumoxid (Al₂O₃), Zirconoxid (ZrO₂) oder einer anderen Hochleistungskeramik ein. Die Befestigung des Grünlings 4 in der Werkstückaufnahme 1 erfolgt dabei durch dessen Einbettung mit einem vorzugsweise gießbaren Einbettmaterial 3, welches den Grünling 4 mechanisch fixiert, dabei allerdings den Keramikpreßverbund nicht beschädigt oder durch irgendwelche chemischen Einwirkungen das Keramik-Rohmaterial verändert. Als preiswertes, gut fräsbares und als Stützkörper geeignetes Einbettmaterial 3 kann beispielsweise ein spezielles Fräswachs verwendet werden.

Im nächsten Schritt, der in Figur 2 dargestellt ist, wird die Werkstückaufnahme 1 in die Halterung einer Fräsmaschine eingesetzt und der Fräsvorgang gestartet, wobei im vorliegenden Fall zunächst die Ausfräsung der Kroneninnenseite des Werkstückes 6 erfolgt. Vorzugsweise erfolgt die Steuerung des Fräsers 5 vollautomatisch mit Hilfe des Fräs- bzw. Abtragungsprogrammes. Bei Verwendung einer schrumpffreien Keramik wäre es allerdings auch denkbar, das Fräsen manuell durchzuführen, z.B. durch ein direktes Kopieren des Positivmodells des Stumpfes. In diesem Fall müßte dann jedoch das Positivmodell mit einem Distanzlack beschichtet oder einem Folienhütchen versehen sein um die erforderliche Zementspaltbreite zu berücksichtigen.

Erfolgt der Fräsvorgang vollautomatisch, kann der Zahntechniker währenddessen wie gewohnt die Krone oder eine andere zahntechnische Arbeit in Wachs modellieren. Diese fertigmodellierte Arbeit wird - auf der Arbeitsunterlage (dem Zahnstumpf bzw. dem Positivmodell) sitzend - nochmals in der Meßvorrichtung dreidimensional vermessen, um die benötigte Struktur der fertigen Zahnkrone festzustellen.

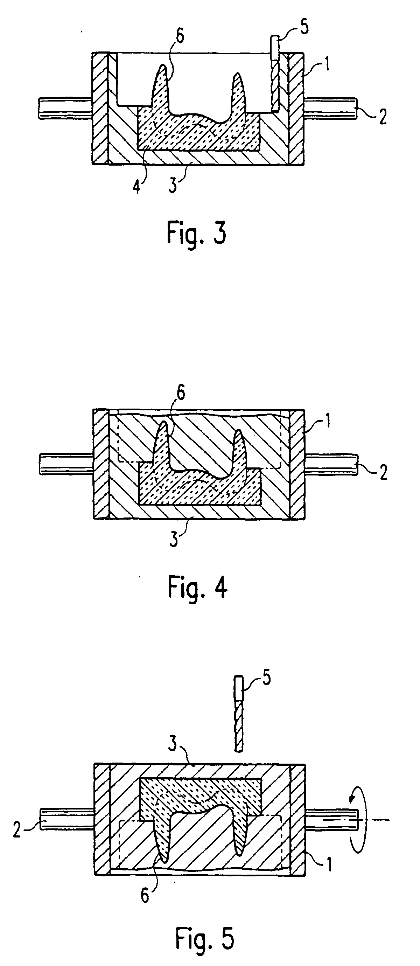

Wie zuvor wird dann mit Hilfe der Software ein Fräsprogramm zum Herausarbeiten der Außenseite der Krone generiert und in die Steuerung der Fräsmaschine geladen. Im dargestellten Beispiel wird dann das Fräsprogramm in zwei Schritte unterteilt, in denen jeweils die bis zum Äquator der Krone gehenden Bereiche (vom Kronenrand bis zum Äquator bzw. von der Okklusalfläche bis zum Äquator) bearbeitet werden. Der erste Schritt dieses Fräsprogrammes, in dem die Außenseite der Krone vom Kronenunterteil bis zum Äquator ausgearbeitet wird, ist in Figur 3 dargestellt. Die zu diesem Zeitpunkt noch nicht ausgearbeitete Seite der Krone 6 wird dabei nach wie vor durch die Einbettmasse 3 gehalten und somit ein Herausfallen des Grünlings 4 aus der Werkstückaufnahme 1 verhindert. Nach dem fertigen Ausarbeiten der Unterseite des Werkstückes 6 wird diese anschließend erneut mit der Einbettmasse 3 vergossen (Figur 4). Es wäre auch möglich, schon vor dem Herausarbeiten dieses ersten Bereichs der Kronenaußenseite die zuvor herausgefräste Kroneninnenseite mit dem Fräswachs 3 wieder aufzufüllen, um die Seitenwände der Krone zu stützen. Anschließend wird durch Drehen der Werkstückaufnahme 1 um 180° die noch zu bearbeitende Kronenoberseite in eine zum Fräsen geeignete Position repositioniert (Figur 5).

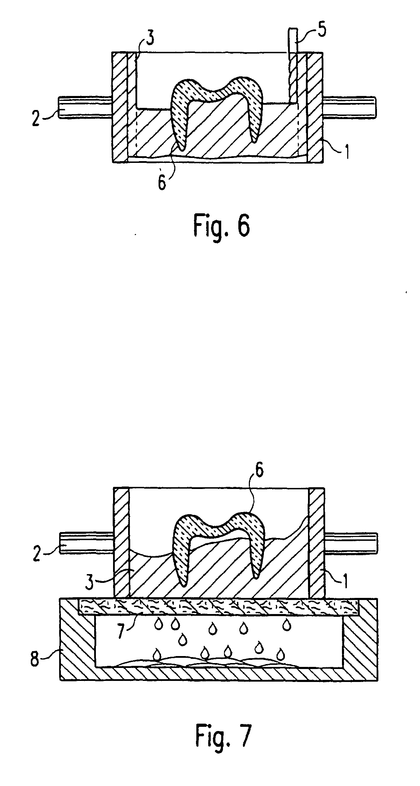

Entsprechend der Darstellung in Figur 6 wird dann im zweiten Schritt des Fräsprogramms das äußere Kronenoberteil von der Okklusalfläche bis zum Äquator gefräst. Die in diesem Stadium instabile und leicht zerbrechliche Werkstückunterseite wird auch während dieses Bearbeitungsschrittes durch die nochmalige Einbettung in das Fräswachs 3 sicher gehalten und an den kritischen Stellen (den teilweise sehr dünnen Seitenwänden des Werkstückes 6 abgestützt, so daß keine Materialausbrüche oder Beschädigungen des Werkstückes 6 zu befürchten sind. Ferner wird durch das erneute Vergießen der Primärseite des Grünlings mit der Einbettmasse 3 ein Herausfallen des Werkstückes 6 vermieden.

Während der gesamten Arbeiten kann das abgefräste Grünling- und Einbettmaterial abgesaugt werden. In einer entsprechend ausgebildeten Staubabsauganlage kann dann das lose und putverförmige Grünlingmaterial von dem Fräswachs 3 separiert und wieder zurückgewonnen werden. Der Zahntechniker kann dann aus diesem zurückgewonnenen Material in einer geeigneten Vorrichtung wiederum neue Grünlinge pressen, so daß aus dem Keramikgrundmaterial eine optimale Ausbeute an Keramik-Formteilen erzielt werden kann.

Nach Beendigung des Fräsvorganges wird das Grünling-Werkstück 6 ausgebettet. Bei der Verwendung von Fräswachs erfolgt dieser Arbeitsschritt beispielsweise mittels eines Heißluftföns, in einem Wärmeofen oder einem in Figur 7 dargestellten speziellen Auswachsgerät. Dabei wird die Werkstückaufnahme 1 mit dem Grünling-Werkstück 6, das noch in einem restlichen Anteil der Einbettmasse 3 gehalten wird, auf eine Fließmatte 7, welche die Oberseite einer Auffangschale 8 bildet, aufgelegt. Während des Zuführens von Wärme schmilzt dann das Fräswachs und tropft durch die Fließmatte 7 in die Auffangschale 8, so daß am Ende das Grünling-Werkstück 6 vollkommen ausgebettet auf der Fließmatte 7 liegt. Das in der Auffangschale aufgefangene abgeschmolzene Fräswachs kann dann ebenso wie das schon zuvor zurückgewonnene pulverförmige Keramik-Rohmaterial wiederverwendet werden.

In einem geeigneten Keramikofen erfolgt dann schließlich im Labor die Sinterung des herausgefrästen Werkstückes 6 zum hochfesten Prothetikteil.

Das soeben beschriebene Verfahren stellt eine besonders vorteilhafte Ausführungsform der Erfindung dar. Die einzelnen Schritte sind dabei so ausgelegt, daß der Grünling möglichst schonend bearbeitet wird um das Entstehen von Materialausbrüchen oder Rissen zu vermeiden. Es sind allerdings auch Abwandlungen des dargestellten Verfahrens denkbar. Z.B. könnte die Reihenfolge der Bearbeitung von Kroneninnenseite und Kronenaußenseite auch vertauscht werden. Ferner wäre es denkbar, nur die Innen- oder Außenkonturen der Werkstücke zu erstellen und diese dann noch anderweitig zu bearbeiten. Vorzugsweise entspricht allerdings die Form des fertig bearbeiteten Grünlings bereits der gewünschten Endform des Keramik-Formteiles (insbesondere bei schrumpffreien Keramiken) oder wird bei Keramiken, die zu einem gewissen Grad schrumpfen, dieser Schrumpffaktor derart berücksichtigt, daß der Grünling während des Sinterns so schrumpft, daß das fertige Formteil die gewünschte Endform aufweist, so daß ein aufwendiges und aus wirtschaftlichen Gesichtspunkten unrentables Nachbearbeiten entfällt. Falls es jedoch aus ästhetischen Gründen gewünscht oder erforderlich ist, können beispielsweise mit Hilfe des Verfahrens lediglich die Teilkonturen der endgültigen Form erstellt werden, wobei dann durch Verblenden mittels Porzellan oder einem anderen geeigneten Material die endgültigen Konturen erstellt werden. Schließlich können je nach Form des herzustellenden Keramik-Formteiles anstelle der Fräsmaschine oder zusätzlich zu dieser auch andere abtragende Maschinen, beispielsweise Dreh-, Bohr- oder Schleifmaschinen verwendet werden.

Der wesentliche Vorteil des Verfahrens liegt darin, daß durch das Ausarbeiten eines Werkstückes aus einem leicht und sicher zu bearbeitenden Grünling die bisher bekannten großen Bearbeitungsproblematiken - der hohe Werkzeugverschleiß, Genauigkeit und Anforderung an die Fräsmaschine und damit auch die Herstellungskosten - erheblich reduziert werden. Dies ist insbesondere dann von Vorteil, wenn medizintechnische oder zahnmedizinische prothetische Werkstücke hergestellt werden sollen, bei denen es sich um Unikate handelt und die daher nicht in großen Stückzahlen hergestellt werden können. Dennoch bietet dieses erfindungsgemäße Verfahren auch beim Herstellen von technischen Teilen große Vorteile, da auch sehr kleine Teile mit einer bisher nicht erreichten Genauigkeit hergestellt werden können.

## Patentansprüche

1. Verfahren zur Herstellung von Formteilen aus Keramik, das folgende Schritte aufweist:
Pressen eines pulverförmigen Keramik-Rohmaterials zu einem Keramikgrünling (4);
Formen der Innenkontur und/oder der Außenkontur der Formteile (6) durch Bearbeiten des Keramikgrünlings (4) mittels abtragender Verfahren; und
Sintern des bearbeiteten Keramikgrünlings (4) zu einem hochfesten Keramik-Formteil,
**dadurch gekennzeichnet,**
**daß** der Keramikgrünling (4) vor der Bearbeitung mittels einer Einbettmasse (3) in eine Werkstückaufnahme (1) eingebettet wird, wobei die Einbettmasse (3) den Keramikgrünling (4) weder beschädigt noch mit diesem chemisch reagiert.

2. Verfahren nach Anspruch 1,
**dadurch gekennzeichnet,**
**daß** ein Keramik-Rohmaterial verwendet wird, welches beim Sintern schrumpffrei oder nahezu schrumpffrei ist.

3. Verfahren nach Anspruch 2,
**dadurch gekennzeichnet,**
**daß** das Keramik-Rohmaterial Zirconoxid (ZrO₂) enthält.

4. Verfahren nach Anspruch 3,
**dadurch gekennzeichnet,**
**daß** das Keramik-Rohmaterial weitere Stoffe enthält, die während des Sinterns mit dem Zirconoxid (ZrO₂) zu ZrSiO₄ reagieren.

5. Verfahren nach Anspruch 2,
**dadurch gekennzeichnet,**
**daß** das Keramik-Rohmaterial Aluminiumoxid (Al₂O₃) enthält.

6. Verfahren nach einem der vorherigen Ansprüche,
**dadurch gekennzeichnet,**
**daß** als Einbettmasse ein Fräswachs (3) verwendet wird.

7. Verfahren nach Anspruch 6,
**dadurch gekennzeichnet,**
**daß** nach dem Bearbeiten des Keramikgrünlings (4) dieser durch Schmelzen des verbliebenen Fräswachses (3) ausgebettet wird.

8. Verfahren nach einem der vorherigen Ansprüche,
**dadurch gekennzeichnet,**
**daß** das Bearbeiten des Keramikgrünlings (4) in mehreren Schritten erfolgt, in denen jeweils bestimmte Bereiche des Keramikgrünlings (4) bearbeitet werden, wobei die bereits zuvor bearbeiteten Bereiche des Keramikgrünlings (4) wieder mit der Einbettmasse (3) umgeben werden.

9. Verfahren nach einem der vorherigen Ansprüche,
**dadurch gekennzeichnet,**
**daß** der Keramikgrünling (4) mit einer abtragenden Maschine (5), wie einer Fräs-, Dreh-, Bohr- oder Schleifmaschine bearbeitet wird.

10. Verfahren nach Anspruch 9,
**dadurch gekennzeichnet,**
**daß** das Bearbeiten des Keramikgrünlings (4) vollautomatisch, beispielsweise durch Fräsen, Drehen, Bohren oder Schleifen erfolgt.

11. Verfahren nach Anspruch 10,
**dadurch gekennzeichnet,**
**daß** dieses entsprechend einem Abtragungsprogramm ausgeführt wird, welches entsprechende Steuerbefehle für die abtragende Maschine (5) enthält, die gewährleisten, daß das Werkstück (6) die gewünschten Konturen erhält.

12. Verfahren nach Anspruch 11,
**dadurch gekennzeichnet,**
**daß** bei der Erstellung des Abtragungsprogrammes eine gewünschte Zementspaltbreite berücksichtigt wird.

13. Verfahren nach Anspruch 11 oder 12,
**dadurch gekennzeichnet,**
**daß** bei der Erstellung des Abtragungsprogrammes ein eventueller Schrumpfungsfaktor des verwendeten Keramik-Rohmaterials berücksichtigt wird.

14. Verfahren nach einem der Ansprüche 11 bis 13,
**dadurch gekennzeichnet,**
**daß** das Abtragungsprogramm auf Basis eines dreidimensional vermessenen Positivmodells erstellt wird.

15. Verfahren nach einem der vorherigen Ansprüche,
**dadurch gekennzeichnet,**
**daß** lediglich Teilkonturen der endgültigen Form des Werkstückes (6) erstellt werden, wobei nach dem Sintern durch Verblenden mit einem Verblendmaterial die endgültigen Konturen des Werkstückes (6) erstellt werden.

16. Verfahren nach einem der vorherigen Ansprüche,
**dadurch gekennzeichnet,**
**daß** das während der Bearbeitung abgetragene Keramik-Rohmaterial gesammelt und wiederverwendet wird.

17. Verfahren nach einem der vorherigen Ansprüche,
**dadurch gekennzeichnet,**
**daß** damit zahntechnische oder prothetische Teile (6) hergestellt werden.

18. Anordnung zur Herstellung von Keramik-Formteilen mittels abhebender Bearbeitungsverfahren,
mit einem aus pulverförmigen Keramik-Rohmaterial gepreßten Keramikgrünling (4), der in eine Einbettmasse (3) eingebettet ist, welche den Keramikgrünling (4) weder beschädigt noch mit diesem chemisch reagiert.

19. Anordnung zur Herstellung von Keramik-Formteilen nach Anspruch 18,
**dadurch gekennzeichnet,**
**daß** der Keramikgrünling (4) mittels der Einbettmasse (3) in eine Werkstückaufnahme (1) eingebettet ist.

20. Anordnung zur Herstellung von Keramik-Formteilen nach Anspruch 18 oder 19,
**dadurch gekennzeichnet,**
**daß** das Keramik-Rohmaterial Zirconoxid (ZrO₂) enthält.

21. Anordnung zur Herstellung von Keramik-Formteilen nach Anspruch 20,
**dadurch gekennzeichnet,**
**daß** das Keramik-Rohmaterial weitere Stoffe enthält, die während beim Sintern des Keramikgrünlings (4) mit dem Zirconoxid (ZrO₂) zu ZrSiO₄ reagieren.

## Claims

1. Method for the production of shaped parts of ceramics, having the following steps:-
pressing a powdery ceramics raw material to a ceramics green compact (4),
shaping the inner contour and/or the outer contour of the shaped parts (6) by working the ceramics green compact by means of a material removal process, and
sintering the worked ceramics green compact (4) to a high strength ceramics shaped part,
**characterised in that**,
before the working the ceramics green compact (4) is embedded in a workpiece receiver (1) by means of an embedding mass (3), the embedding mass (3) neither damaging the ceramics green compact (4) nor chemically reacting therewith.

2. Method according to claim 1,
**characterised in that**,
there is employed a ceramics raw material which upon sintering is shrinkage free or virtually shrinkage free.

3. Method according to claim 2,
**characterised in that**,
the ceramics raw material contains zirconium oxide (ZrO₂).

4. Method according to claim 3,
**characterised in that**,
the ceramics raw material contains further substances which, during the sintering, react with the zirconium oxide (ZrO₂) to ZrSiO₄.

5. Method according to claim 2,
**characterised in that**,
the ceramics raw material contains aluminium oxide (Al₂O₃).

6. Method according to any preceding claim,
**characterised in that**,
a milling wax (3) is employed as embedding mass.

7. Method according to claim 6,
**characterised in that**,
after the working of the ceramics green compact (4) this is released from the embedding by melting of the remaining milling wax (3).

8. Method according to any preceding claim,
**characterised in that**,
the working of the ceramics green compact (4) is effected in a plurality of steps in which in each case certain regions of the ceramics green compact (4) are worked, the regions of the ceramics green compact (4) already previously worked being again surrounded with the embedding mass (3).

9. Method according to any preceding claim,
**characterised in that**,
the ceramics green compact is worked with a material removing machine (5), such as a milling machine, lathe, boring machine or grinding machine.

10. Method according to claim 9,
**characterised in that**,
the working of the ceramics green compact (4) is effected fully automatically, for example by means of milling, turning, boring or grinding.

11. Method according to claim 10,
**characterised in that**,
this is carried out in accordance with a material removal program which contains appropriate control commands for the material removing machine (5) which ensure that the workpiece (6) receives the desired contours.

12. Method according to claim 11,
**characterised in that**,
in the drawing up of the material removal program there is taken into account a desired cement gap width.

13. Method according to claim 11 or 12,
**characterised in that**,
in the drawing up of the material removal program there is taken into account a possible shrinkage factor of the ceramics raw material employed.

14. Method according to any of claims 11 to 13,
**characterised in that**,
the material removal program is drawn up on the basis of a three dimensional measured positive model.

15. Method according to any preceding claim,
**characterised in that**,
only part contours of the final shape of the workpiece (6) are produced, wherein after the sintering the final contours of the workpiece (6) and produced by facing with a facing material.

16. Method according to any preceding claim,
**characterised in that**,
during the working removed ceramics raw material is collected and re-used.

17. Method according to any preceding claim,
**characterised in that**,
dental technical or prosthetic parts are produced therewith.

18. Arrangement for the production of ceramics shaped parts by means of a material removing working process, having a ceramics green compact (4) pressed of powdery ceramics raw material,
which is embedded in an embedding mass (3) which neither damages the ceramics green compact (4) nor chemically reacts therewith.

19. Arrangement for the production of ceramics shaped parts according to claim 18,
**characterised in that**,
the ceramics green compact (4) is embedded in a workpiece receiver (1) by means of the embedding mass (3).

20. Arrangement for the production of ceramics shaped parts according to claim 18 or 19,
**characterised in that**,
the ceramics raw material contains zirconium oxide (ZrO₂).

21. Arrangement for the production of ceramics shaped parts according to claim 20,
**characterised in that**,
the ceramics raw material contains further substances which, during the sintering, react with the zirconium oxide (ZrO₂) to ZrSiO₄.

## Revendications

1. Procédé pour la fabrication de pièces façonnées en céramique, qui comprend les étapes suivantes :
compression d'un matériau brut de céramique pulvérulent en une ébauche de compact céramique (4) ;
formage du contour intérieur et/ou du contour extérieur des pièces façonnées (6) par traitement de l'ébauche de compact céramique (4) au moyen de procédés d'enlèvement ; et frittage de l'ébauche de compact céramique (4) traité pour obtenir une pièce façonnée céramique très résistante,
**caractérisé en ce que**
l'ébauche de compact céramique (4) est enrobée avant le traitement au moyen d'une masse d'enrobage (3) dans un logement de pièce (1), la masse d'enrobage (3) n'endommageant pas l'ébauche de compact céramique (4) et ne réagissant pas au plan chimique avec celui-ci.

2. Procédé selon la revendication 1,
**caractérisé en ce que**
un matériau brut céramique est utilisé qui ne rétrécit pas ou pratiquement pas lors du frittage.

3. Procédé selon la revendication 2,
**caractérisé en ce que**
le matériau brut céramique contient de l'oxyde de zircon (ZrO₂).

4. Procédé selon la revendication 3,
**caractérisé en ce que**
le matériau brut céramique contient d'autres substances qui réagissent pendant le frittage avec l'oxyde de zircon (ZrO₂) pour former du ZrSiO₄.

5. Procédé selon la revendication 2,
**caractérisé en ce que**
le matériau brut céramique contient de l'oxyde d'aluminium (Al₂O₃).

6. Procédé selon l'une quelconque des revendications précédentes,
**caractérisé en ce que**
une cire de fraisage (3) est utilisée comme masse d'enrobage.

7. Procédé selon la revendication 6,
**caractérisé en ce que**
après le traitement de l'ébauche de compact céramique (4), celui-ci est sorti de l'enrobage par fusion de la cire de fraisage (3) restée.

8. Procédé selon l'une quelconque des revendications précédentes,
**caractérisé en ce que**
le traitement de l'ébauche de compact céramique (4) s'effectue en plusieurs étapes au cours desquelles respectivement certaines zones de l'ébauche de compact céramique (4) sont traitées, les zones déjà traitées auparavant de l'ébauche de compact céramique (4) étant entourées à nouveau avec la masse d'enrobage (3).

9. Procédé selon l'une quelconque des revendications précédentes,
**caractérisé en ce que**
l'ébauche de compact céramique (4) est traité avec une machine (5) d'enlèvement comme une fraiseuse, un tour, une aléseuse ou une rectifieuse.

10. Procédé selon la revendication 9,
**caractérisé en ce que**
le traitement de l'ébauche de compact céramique (4) est effectué par voie entièrement automatisée, par exemple par fraisage, tournage, alésage ou rectification.

11. Procédé selon la revendication 10,
**caractérisé en ce que**
ceci est réalisé selon un programme d'enlèvement qui contient des instructions de commande appropriées pour la machine d'enlèvement (5), qui garantissent que la pièce (6) reçoit les contours souhaités.

12. Procédé selon la revendication 11,
**caractérisé en ce que**
une largeur de fente de ciment souhaitée est prise en compte lors de l'élaboration du programme d'enlèvement.

13. Procédé selon la revendication 11 ou 12,
**caractérisé en ce que**
un éventuel facteur de rétrécissement du matériau brut céramique utilisé est pris en compte lors de l'établissement du programme d'enlèvement.

14. Procédé selon l'une quelconque des revendications 11 à 13,
**caractérisé en ce que**
le programme d'enlèvement est établi sur la base d'un modèle positif mesuré en trois dimensions.

15. Procédé selon l'une quelconque des revendications précédentes,
**caractérisé en ce que**
seuls des contours partiels de la forme définitive de la pièce (6) sont élaborés, les contours définitifs de la pièce (6) étant élaborés après le frittage par parement avec un matériau de parement.

16. Procédé selon l'une quelconque des revendications précédentes,
**caractérisé en ce que**
le matériau brut céramique enlevé pendant le traitement est collecté et réutilisé.

17. Procédé selon l'une quelconque des revendications précédentes,
**caractérisé en ce que**
des éléments prothétiques dentaires ou prothétiques (6) sont fabriqués.

18. Dispositif pour la fabrication de pièces façonnées céramique au moyen de procédés de traitement par enlèvement,
avec une ébauche de compact céramique (4) comprimé à partir de matériau brut céramique pulvérulent, qui est enrobé dans une masse d'enrobage (3), laquelle n'endommage pas l'ébauche de compact céramique (4) et ne réagit pas avec celui-ci au plan chimique.

19. Dispositif pour la fabrication de pièces façonnées céramique selon la revendication 18,
**caractérisé en ce que**
l'ébauche de compact céramique (4) est enrobé au moyen de la masse d'enrobage (3) dans le logement de pièce (1).

20. Dispositif pour la fabrication de pièces façonnées céramique selon la revendication 18 ou 19,
**caractérisé en ce que**
le matériau brut céramique contient de l'oxyde de zircon (ZrO₂).

21. Dispositif pour la fabrication de pièces moulées façonnées selon la revendication 20,
**caractérisé en ce que**
le matériau brut céramique contient d'autres substances qui réagissent pendant le frittage de l'ébauche de compact céramique (4) avec l'oxyde de zircon (ZrO₂) pour former du ZrSiO₄.
